# EUROPEAN PATENT APPLICATION

(11) **EP 2 642 641 A1**
(43) Date of publication of application: **25.09.2013**
(21) Application number: 12160166.0
(22) Date of filing: 19.03.2012
(51) Int. Cl.: H02K 9/18, H02K 9/20, H02K 9/28

(54) **Electric machine**

(71) Applicant: Alstom Technology Ltd, 5400 Baden (CH)
(72) Inventor: Perzlmaier, Johann, 79804 Dogern (DE)

(57) **Abstract**

The electric machine (1) comprises a casing (4) that houses a stator (2) and a rotor (3) . The electric machine (1) further includes an auxiliary component (8) with a cooler (20). The cooler (20) has a housing (21) defining a first chamber (22) with at least an inlet (23) and at least an outlet (24) for a first fluid, and a second chamber (25) with at least an inlet (26) and at least an outlet (27) for a second fluid. Reservoirs (28) being provided with a portion (28a) housed in the first chamber (22) and a portion (28a) housed in the second chamber (25). The reservoirs (28) contain a fluid.

## Description

### TECHNICAL FIELD

The present disclosure relates to an electric machine. For example the electric machine can be an electric generator, such as a synchronous electric generator, or an electric motor.

### BACKGROUND

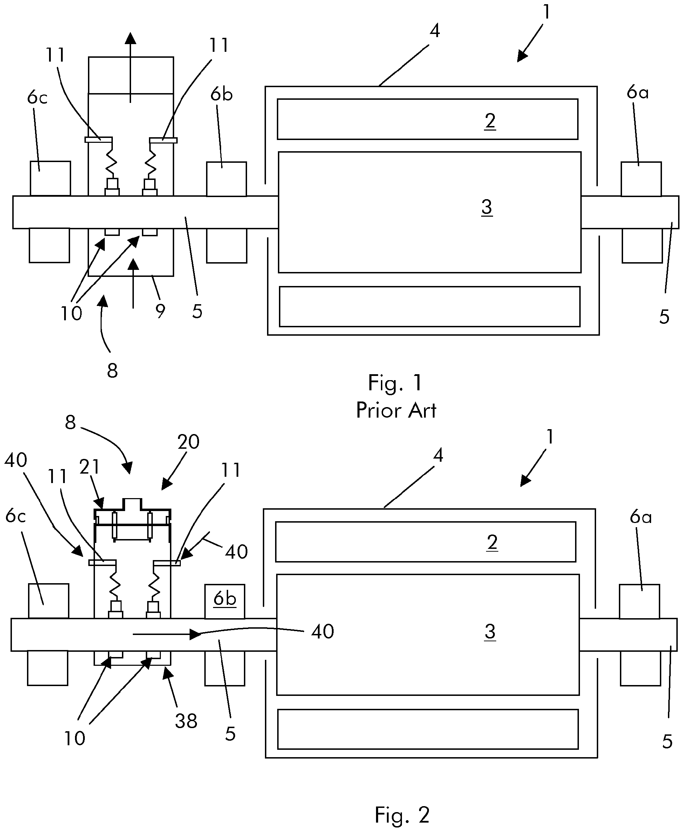

With reference to figure 1, an electric machine such as an electric generator is shown. Such an electric generator can be a turbogenerator, i.e. a synchronous electric generator arranged to be connected to a gas turbine and/or steam turbine.

The electric machine 1 has a stator 2 and a rotor 3 housed in a casing 4.

The rotor has shafts 5 that protrude from its ends and extend outside of the casing 4. The parts of the shafts 5 outside of the casing 4 are supported by bearings; usually one bearing 6a is provided at the generator driven end, and two bearings 6b, 6c at the generator non driven end.

In addition, in order to supply the rotor 3 with electric power or to collect electric power from the rotor (according to electric machine), a slip ring unit 8 is provided.

The slip ring unit 8 includes a case 9 that houses sliding contacts 10 and from which fixed contacts 11 project.

The part of the sliding contacts 10 fixed to the shaft 5 is then connected via a lead embedded in the shaft to the winding of the rotor 3.

During operation the sliding contacts 10 generate heat that must be removed.

In order to protect the sliding contacts 10 from the outside environment and since during operation the sliding contacts 10 generate coal dust, a closed circuit water cooling system is used.

The same issues exist with other auxiliary components of the electric machine, such as for example rotating diodes, brushless exciters, sealing system, converter for excitation and start up, etc. Also in these cases closed circuit water cooling systems are often used.

These traditional cooling systems for auxiliary components have some drawbacks.

In fact, water cooling systems require pipes for water circulation. In addition, in order to prevent water leakage, maintenance of these pipes is needed.

### SUMMARY

An aspect of the disclosure includes providing an electric machine with an auxiliary component having coolers that require a limited number of pipes or no pipes at all for water or fluid circulation.

Another aspect of the disclosure is to provide an electric machine with an auxiliary component having a cooler having reduced or no risk of water or fluid leakage.

A further aspect of the disclosure is to provide an electric machine that requires reduced maintenance when compared to traditional electric machines.

These and further aspects are attained by providing an electric machine in accordance with the accompanying claims.

### BRIEF DESCRIPTION OF THE DRAWINGS

Further characteristics and advantages will be more apparent from the description of a preferred but non-exclusive embodiment of the electric machine illustrated by way of non-limiting example in the accompanying drawings, in which:
Figure 1 is a schematic view of a known electric machine;
Figure 2 is a schematic view of an embodiment of the electric machine;
Figure 3 is an enlarged view of a cooler;
Figure 4 is an additional embodiment of the electric machine;
Figure 5 is a example of a different cooler;
Figure 6 is an example of a reservoir of the cooler; and

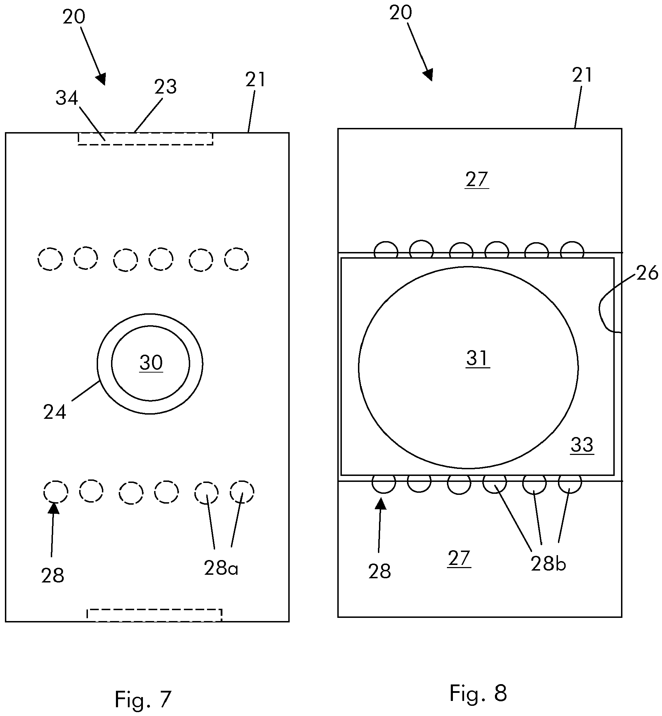

Figures 7 and 8 show a top view and a bottom view of the cooler in the embodiment of figure 3.

### DETAILED DESCRIPTION OF EXEMPLARY EMBODIMENTS

In the following like reference numerals designate like or corresponding parts throughout the several views.

The electric machine 1 comprises a casing 4 that houses a stator 2 and a rotor 3. In general the electric machine is a rotary electric machine such as an electric generator (for example a turbogenerator, i.e. a synchronous generator to be connected to a gas or steam turbine) or a hydro generator (i.e. a synchronous generator to be connected to a hydro turbine), but it can also be an asynchronous generator, an electric motor (either synchronous or asynchronous), etc.

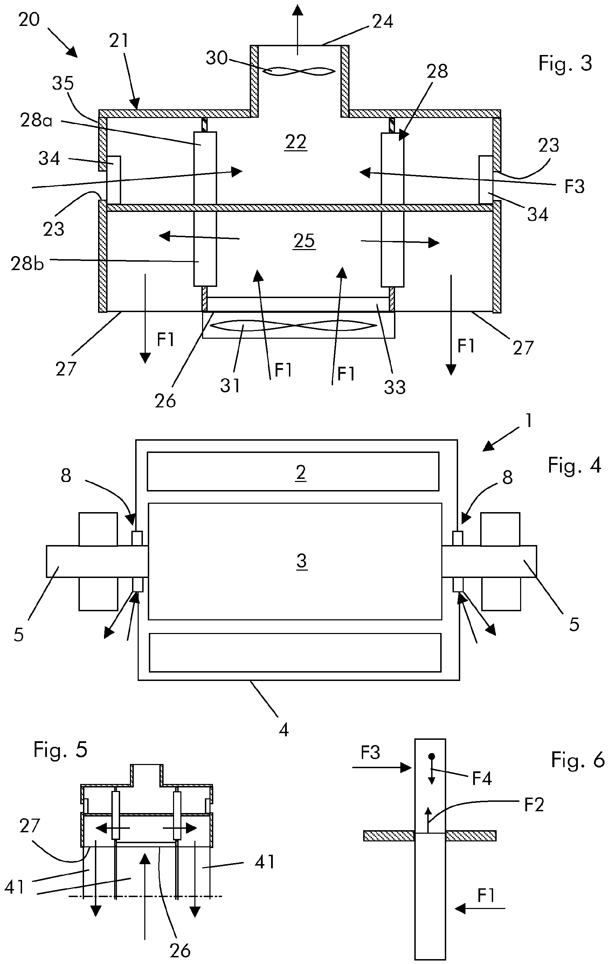

In addition, the electric machine 1 includes an auxiliary component 8. The auxiliary component 8 can be a slip ring unit (like the example shown in figure 2) or a sealing system (like the example shown in figure 4) or rotating diodes, brushless exciters, a sealing system, a converter for excitation and/or start up; other examples are anyhow possible. Auxiliary components are those components that are needed for the correct operation of the electric machine 1 and require a cooling that is smaller than the cooling required by the stator 2 and rotor 3.

The auxiliary component 8 has a cooler 20.

The cooler 20 has a housing 21 that defines a first chamber 22 with one or more inlets 23 (in the example two inlets) and one or more outlets 24 (in the example one outlet) for a first fluid.

The housing 21 also defines a second chamber 25 with one or more inlets 26 (in the example one inlet) and one or more outlets 27 (in the example two outlets) for a second fluid.

The housing 21 houses one or usually more than one reservoirs 28 that have a portion 28a housed in the first chamber 22 and a portion 28b housed in the second chamber 25.

The reservoirs 28 contain a fluid, preferably a frigorific fluid.

The first fluid is arranged to condense the fluid contained in the reservoirs 28 and the second fluid is arranged to evaporate the fluid contained in the reservoirs 28.

The first chamber 22 has the reservoir portions 28a between the inlets 23 and outlets 24.

Likewise the second chamber 25 has the reservoir portions 28b between the inlets 26 and the outlets 27.

The first chamber 22 is on top of the second chamber 25.

The auxiliary component 8 of the electric machine 1 also comprises one or more fans 30 for the circulation of the first fluid; preferably these fans 30 are located at the outlet 24 of the first chamber 22.

Additionally, the auxiliary component 8 of the electric machine 1 can also include one or more fans 31 or pumps for the circulation of the second fluid; these fans 31 or pumps can be located at the inlet 26 of the second chamber 25.

One or more filters 33 can be provided at the inlets of the second chamber 25.

Likewise one or more filters 34 can be provided at the inlets 23 of the first chamber 22.

Preferably the first chamber 22 has inlets 23 at a side walls 35 (or top wall) of the housing 21, and an outlet 24 at a top wall (or side wall) of the housing 21.

The second chamber 25 has an inlet 26 at a bottom wall (or side wall) of the housing 21, and the outlets 27 at a bottom wall (or side wall) of the housing 21.

In an embodiment, the auxiliary component 8 has a case 9 and the housing 21 of the cooler 20 is a part of the case 9 of the auxiliary component 8.

In this case the housing 21 preferably defines the top part of the case 9.

The operation of the electric machine 1 is apparent from that described and illustrated and is substantially the following.

During operation the slip ring unit transfers electric power 40 to the rotor 3 via the contacts 11 and 10; this causes heat generation.

In order to dissipate heat, circulation of the fluid contained in the case 9 (for example air) is provided. The fluid contained in the case 9 licks the sliding contacts 10 to cool them and is then fed to the second chamber 25 of the cooler 20 through the inlet 26, filters 33 and when provided fans 31 (i.e. it is the second fluid). The second fluid thus passes through the reservoir portions 28b (arrows F1) and moves out from the chamber 25 via the outlets 27. When passing through the reservoir portions 28b, the second fluid vaporises the fluid contained therein (arrow F2); this draws heat from the second fluid.

At the same time, the first fluid that can be ambient air or the fluid that cools the electric machine or also another fluid, enters the first chamber 22 via the inlets 23 and filters 34 (arrows F3). Thus the first fluid F3 passes through the reservoir portions 28a and condensate the fluid contained in the reservoirs 28 (arrow F4); this causes heat transfer from the fluid contained in the reservoirs 28 to the first fluid.

The first fluid warmed up is thus discharged via the outlet 24 and fans 30.

Figure 5 shows a different example in which the second fluid is a liquid fluid, such as for example oil of a sealing system.

In this case the structure and the operation of the cooler 20 are similar to those already described, but the inlet 26 and outlets 27 are connected to pipes 41 for conveying the liquid fluid.

Naturally the features described may be independently provided from one another.

In practice the materials used and the dimensions can be chosen at will according to requirements and to the state of the art.

### REFERENCE NUMBERS

- 1: electric machine
- 2: stator
- 3: rotor
- 4: casing
- 5: shaft
- 6a, 6b, 6c: bearings
- 8: auxiliary component
- 9: case
- 10: contacts
- 11: contacts
- 20: cooler
- 21: housing
- 22: first chamber
- 23: inlet
- 24: outlet
- 25: second chamber
- 26: inlet
- 27: outlet
- 28: reservoir
- 28a, 28b: portions of reservoir
- 30: fan
- 31: fan
- 33: filter
- 34: filter
- 35: side wall
- 40: electric power
- 41: pipe
- F1: second fluid
- F2: evaporation
- F3: first fluid
- F4: condensation

## Claims

1. An electric machine (1) comprising a casing (4) that houses a stator (2) and a rotor (3), the electric machine (1) further including an auxiliary component (8) with a cooler (20), **characterised in that** the cooler (20) has a housing (21) defining a first chamber (22) with at least an inlet (23) and at least an outlet (24) for a first fluid,
a second chamber (25) with at least an inlet (26) and at least an outlet (27) for a second fluid,
at least a reservoir (28) being provided with a portion (28a) housed in the first chamber (22) and a portion (28a) housed in the second chamber (25) a fluid contained in the at least a reservoir (28).

2. The electric machine (1) according to claim 1, **characterised in that** the first fluid is arranged to condense the fluid contained in the at least a reservoir (28).

3. The electric machine (1) according to claim 1, **characterised in that** the second fluid is arranged to evaporate the fluid contained in the reservoir (28).

4. The electric machine (1) according to claim 1, **characterised in that** the first chamber (22) has the at least a reservoir portion (28a) between an inlet (23) and an outlet (24).

5. The electric machine (1) according to claim 1, **characterised in that** the second chamber (25) has the at least a reservoir portion (28b) between the inlet (26) and the outlet (27).

6. The electric machine (1) according to claim 1, **characterised in that** the first chamber (22) is on top of the second chamber (25).

7. The electric machine (1) according to claim 1, **characterised by** comprising at least a fan (30) for the circulation of the first fluid.

8. The electric machine (1) according to claim 1, **characterised by** comprising at least a fan (31) or pump for the circulation of the second fluid.

9. The electric machine (1) according to claim 1, **characterised by** comprising at least a filter (33) at an inlet (26) of the second chamber (25).

10. The electric machine (1) according to claim 1, **characterised by** comprising at least a filter (34) at an inlet (23) of the first chamber (22).

11. The electric machine (1) according to claim 1, **characterised in that** the first chamber (22) has the at least an inlet (23) at a side wall (35) or top wall of the housing (21), and
the at least an outlet (24) at a top wall or side wall of the housing (21).

12. The electric machine (1) according to claim 1, **characterised in that** the second chamber (25) has the at least an inlet (26) at a bottom wall or side wall of the housing (21), and
the at least an outlet (27) at a bottom wall or side wall of the housing (21).

13. The electric machine (1) according to claim 1, **characterised in that** the auxiliary component (8) has a case (9), wherein the housing (21) of the cooler (20) is a part of the case (9) of the auxiliary component (8).

14. The electric machine (1) according to claim 1, **characterised in that** the auxiliary component (8) is a slip ring unit.

15. The electric machine (1) according to claim 1, **characterised in that** the auxiliary component (8) is a sealing system and/or rotating diodes and/or brushless exciters and/or a converter.
